**Europäisches Patentamt**

**European Patent Office**

**Office européen des brevets**

(19)

(11) Numéro de publication : **0 167 494 B1**

(12) **FASCICULE DE BREVET EUROPÉEN**

(45) Date de publication du fascicule du brevet :
07.09.88

(51) Int. Cl.⁴ : **A 01 G   9/14, A 01 G   9/22**

(21) Numéro de dépôt : **85830083.3**

(22) Date de dépôt : **03.04.85**

(54) **Panneaux agricoles.**

(30) Priorité : **04.06.84 IT 4831384**

(43) Date de publication de la demande :
**08.01.86 Bulletin 86/02**

(45) Mention de la délivrance du brevet :
**07.09.88 Bulletin 88/36**

(84) Etats contractants désignés :
**AT CH DE FR GB IT LI LU NL SE**

(56) Documents cités :
**CH-A-   219 066**
**CH-A-   600 747**
**DE-A- 1 582 815**
**FR-A- 2 485 330**
**GB-A- 2 128 651**
**US-A- 1 682 005**

(73) Titulaire : **Tomassini, Emilia**
**Rue Alessandro Cialdi 5b**
**I-00154 Rome (IT)**

(72) Inventeur : **Tomassini, Emilia**
**Rue Alessandro Cialdi 5b**
**I-00154 Rome (IT)**

## Description

Des panneaux d'un matériel de préférence transparent sont joints l'un à l'autre en forme de toiture à double pente de façon à protéger les cultures agricoles contre les intempéries.

Comme chacun le sait, les intempéries, en particulier celles de type violent et prolongé, sont susceptibles de causer des dommages incalculables à des agriculteurs provoquant souvent la destruction totale des récoltes.

Le but de la présente intervention, c'est de fournir un système capable de protéger les terrains agricoles des conditions météorologiques particulièrement nuisibles pour les cultures.

Il est connu de FR-A-2 485 330 ou de GB-A-2 128 651 de réaliser la couverture d'une serre à l'aide de panneaux rigides ou semi-rigides, en verre ou en plastique, munies des trous pour laisser passer l'eau de pluie. Ces panneaux pouvant-être raidis sur leurs côtés pas des plis ou rebords à 90° et sont supportés par un châssis. Il est aussi connu de prévoir des toiles de protection dépliables sur la toiture des serres (CH-219 066, US-A-1 682 005) ou d'évacuer l'eau entreposée sur un toit plat d'une serre par des tubes vers des réservoirs (DE-A-1 582 815).

La présente intervention sera mieux illustrée, par la description suivante préférée, donnée à titre d'exemple non limitatif, l'étendue de la protection étant définie par les revendications.

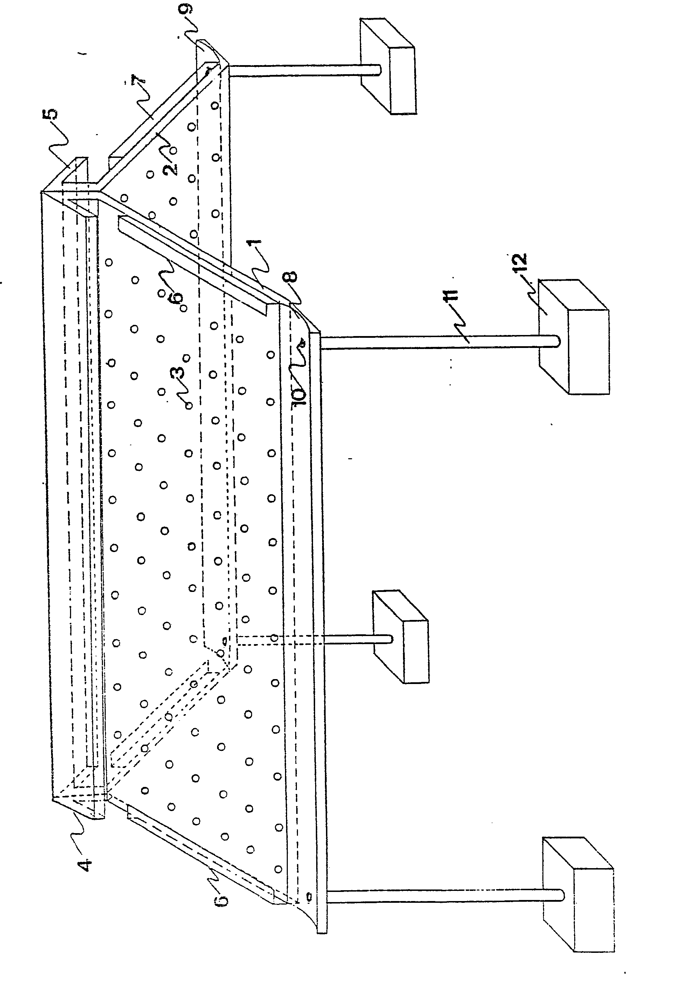

Avec référence à l'illustration du dessin annexe sont indiqués avec (1) et (2) deux panneaux rectangulaires constitués par une plaque de préférence transparente par exemple en verre, de l'épaisseur correspondant à la résistance nécessaire et qui sont joints l'un à l'autre en forme de toiture à double pente de façon de constituer ensemble avec d'autres similaires à cotés en correspondance de côtés et extrémités correspondants une couverture pour la protection des cultures agricoles contre les intempéries particulièrement violentes et persistantes, comme celles dues à la pluie, la grêle ou la neige.

Une caractéristique en soi connue des panneaux (1) et (2) en question consiste dans le fait que leur surface n'est pas compacte, mais qu'elle présente des perforations (3) d'un diamètre, par exemple de 1 cm ; les perforations se présentent perpendiculaires à l'épaisseur du panneau, et donc obliques par rapport au terrain. Le sommet du panneau (1), (2) est compact et replié en forme de livre (4, 5), car il est destiné à loger une toile imperméable (de préférence transparente). Des coulisses sont prévues dans un repliement latéral (6, 7) du panneau et l'on installe des dispositifs permettant de baisser et soulever la toile sur les châssis. La base du panneau (1) et (2) est pliée en coin et se présente parallèle au terrain (8, 9) pour la réception des eaux.

La base en question présente dans sa partie inférieure deux perforations (10) espacées entre elles, d'un diamètre de 5 ou 6 cm environ, et qui ne perforent pas toute l'épaisseur, mais seulement la moitié. En correspondance avec les dites perforations dans la partie supérieure sont aussi pratiquées des perforations d'un diamètre inférieur. Dans la partie située sous la base du panneau, dans les perforations décrites, sont introduits des châssis (11) tubulaires, (ou de toute façon vides au centre), par exemple en aluminium anodisé, de support des panneaux (1) et (2) ; aux châssis en question sont ensuite reliés des réservoirs, de préférence enterrés ou non dans le terrain (12).

Pendant le fonctionnement, lorsque se produisent des pluies trop prolongées, on étend la toile qui, se fixant sur les côtés du panneau où se trouvent aussi les coulisses, arrive jusqu'à la base du panneau (1) et (2). Lorsque l'eau descend sur la toile, elle arrive à la base, pénètre dans les châssis et se dépose dans les réservoirs, constituant une réserve hydrique.

## Revendications

1. Système pour la protection de surfaces agricoles contre les intempéries, formé par un assemblage de panneaux (1, 2) rigides ou semi-rigides munis de perforations (3) aptes à laisser passer l'eau de pluie, cet assemblage réalisant sur la surface à protéger un toit ou une couverture, supporté par un châssis, caractérisé en ce que

- cet assemblage formant toit est réalisé à partir de la jonction de deux panneaux (1, 2), chacun formant une pente respective du toit, placés bord contre bord symétriquement par rapport au sommet du toit,

- chaque panneau (1, 2) ayant d'une part son bord supérieur (4, 5), qui forme le sommet du toit par accolement avec le bord supérieur du panneau adjacent symétrique, conformé en forme de repli revenant au-dessus de la surface supérieure du panneau de manière à créer un logement le long du sommet du toit pour une toile de protection pliée ou enroulée éventuelle, et d'autre part son bord inférieur opposé (8, 9) de forme concave de façon à recueillir l'eau s'écoulant du toit, ces deux bords supérieurs et inférieurs n'étant pas perforés, le bord inférieur comportant toutefois des trous d'évacuation (10) de l'eau recueillie,

- et en ce que le châssis de support comporte des poteaux tubulaires placés en communication avec lesdits trous d'évacuation (10) et reliés à des réservoirs d'eau.

2. Système selon la revendication 1, caractérisé en ce que les panneaux sont transparents.

3. Système selon l'une des revendications précédentes, caractérisé en ce que les perforations des panneaux sont perpendiculaires aux surfaces principales de ces panneaux.

4. Système selon l'une des revendications précédentes, caractérisé en ce que chaque panneau ou un ensemble de panneaux sur un même côté du toit est équipé d'une toile imperméable, éventuellement transparente, des dispositifs étant prévus pour enrouler ou dérouler chaque toile, de même que des coulisses (6, 7) formées par un repli des bords latéraux des panneaux permettant de guider la toile.

5. Système selon d'une des revendications précédentes, où les réservoirs sont enterrés ou non.

6. Panneau pour la protection de surfaces agricoles contre les intempéries, en forme de plaque rigide ou semi-rigide munie de perforations (3) aptes à laisser passer l'eau de pluie et ayant des rebords sur certains de ses cotés, caractérisé en ce qu'il possède un bord, dit bord supérieur (4, 5), en forme de repli revenant au-dessus de la surface du panneau de manière à créer un logement le long de ce bord pour une éventuelle toile de protection pliée ou enroulée, et en ce que le bord opposé à ce bord supérieur, appelé bord inférieur (8, 9), est de forme concave, en regardant la même surface de panneau, de façon à pouvoir recueillir l'eau s'écoulant du panneau lorsqu'il est disposé en pente, ces deux bords supérieurs et inférieurs n'étant pas perforés, le bord inférieur comportant toutefois des trous d'évacuation (10) de l'eau recueillie aptes à être raccordés à des tubes d'évacuation.

7. Panneau selon la revendication 6, caractérisé en ce qui qu'il est transparent.

8. Panneau selon l'une des revendications 6 ou 7, caractérisé en ce que les bords joignant le bord supérieur au bord inférieur comportent éventuellement un repli destiné à servir de coulisse ou guide pour la toile de protection.

9. Panneau selon l'une des revendications 6-8, caractérisé en ce que les perforations sont perpendiculaires aux surfaces principales du panneau et en ce que les trous d'évacuation (10) du bord inférieur ont des diamètres différents sur l'épaisseur du panneau.

**Claims**

1. System for protecting agricultural surfaces against bad weather, composed of an assembly of rigid or semi-rigid panels (1, 2) featuring perforations (3) designed to let rain water pass through, this assembly forming a roof or covering supported by a framework over the surface to be protected, characterised by the fact that

- this assembly forming a roof is made by joining together two panels (1, 2), each forming a slope of the roof, the edges of which are joined together symmetrically at the ridge of the roof,

- part of the top edge (4, 5) forming the ridge of each panel (1, 2) is turned back on itself above the upper surface of the panel forming a housing along the the ridge of the roof, able to accept a folded or roll-up protective fabric covering, whilst the opposite bottom edge (8, 9) is turned up in a concave shape, in such a way as to collect the water running down the roof ; these two edges are not perforated, although the bottom one has drain holes (10) for the water collected,

- as well as by the fact that the supporting framework features tubular posts in communication with the said drain holes (10) and connected to water tanks.

2. System as in claim 1, characterised by the fact that the panels are transparent.

3. System as claimed above, characterised by the fact that the panel perforations are perpendicular to the main surfaces of the panels.

4. System as claimed above, characterised by the fact that each panel or assembly of panels on the same side of the roof is fitted with a waterproof fabric covering, transparent if desired, and features grooves (6, 7) formed by turning the side edges of the panels back upon themselves, enabling the fabric to be guided so that devices can be fitted for winding each fabric covering up and down.

5. System as claimed above, in which the water tanks can be located above or below ground.

6. Panel for protecting agricultural surfaces against bad weather, in the form of rigid or semi-rigid sheets featuring perforations (3) designed to let rainwater pass through, and edges on some of its sides, characterised by the fact that one edge, referred to as the top edge (4, 5), is turned back upon itself, above the surface of the panel, in such a way as to create a housing along this edge, able to accept a folded or rolled-up protective fabric covering, and by the fact that the opposite edge, referred to as the bottom edge (8, 9), has a concave shape and is angled with respect to the said surface of the panel in such a way as to collect the rain water running down the sloping panel ; these two top and bottom edges are not perforated, although the bottom edge features drain holes (10) for the water collected, designed to be connected to drain pipes.

7. Panel as in claim 6, characterised by the fact that it is transparent.

8. Panel as in claim 6 or 7, characterised by the fact that the edges which are contiguous to the top and bottom edge may feature a turned over portion serving as a groove or guide for the protective fabric.

9. Panel as in claims 6-8, characterised by the fact that the perforations are perpendicular to the main surfaces of the panel and may have a diameter that varies over the main surface of the panel.

**Patentansprüche**

1. System zum Schutz von landwirtschaftlichen Flächen gegen Unwetter, bestehend aus einer Reihe von starren oder halbstarren Platten (1, 2) mit Löchern (3) zum Durchlass des Regenwassers, wobei die Einheit über der zu schützenden Fläche ein Dach oder eine Abdeckung bildet, welche durch einen Rahmen getragen wird, dadurch gekennzeichnet, dass

- diese, ein Dach bildende Einheit mit zwei Platten (1, 2), von denen jede eine Dachschräge bildet, durch die symmetrische Verbindung der jeweiligen Ränder an der Dachspitze ausgeführt wird

- jede Platte (1, 2) in einem Teil ihres oberen Randes (4, 5), der in Verbindung mit dem oberen Rand der symmetrisch angeordneten Platte die Dachspitze bildet, eine Biegung aufweist, die über die obere Fläche der Platte zurückläuft, so dass entlang der Dachspitze eine Aushöhlung zur Aufnahme einer zusammengefalteten oder eingerollten Schutzplane geschaffen wird, und am unteren, entgegengesetzten Rand (8, 9) konkav ausgebildet ist, so dass das vom Dach herablaufende Wasser aufgefangen wird, wobei der obere und untere Rand nicht durchlöchert sind, der untere Rand jedoch Wasserabflusslöcher (10) aufweist

- und dadurch gekennzeichnet, dass der Rahmen aus rohrförmigen Pfosten gebildet ist, die mit genannten Wasserabflusslöchern (10) verbunden und an Wasserbehälter angeschlossen sind.

2. System gemäss Anspruch 1, dadurch gekennzeichnet, dass die Platten durchsichtig sind.

3. System gemäss vorstehenden Ansprüchen, dadurch gekennzeichnet, dass die Löcher der Platten rechtwinklig zu den Hauptflächen dieser Platten angeordnet sind.

4. System gemäss vorstehenden Ansprüchen, dadurch gekennzeichnet, dass jede Platte oder Plattengruppe auf derselben Seite des Daches mit einer wasserundurchlässigen, eventuell durchsichtigen Plane ausgestattet ist und Vorrichtungen zum Aufrollen und Abrollen jeder Plane vorgesehen sind, so dass die durch die Biegung der Seitenränder der Platten gebildeten Aushöhlungen (6, 7) als Führung der Plane dienen.

5. System gemäss vorstehenden Ansprüchen, dadurch gekennzeichnet, dass die Wasserbehälter im Boden eingegraben sein können oder auch nicht.

6. Platte zum Schutz von landwirtschaftlichen Flächen gegen Unwetter, bestehend aus einer starren oder halbstarren Platte mit Löchern (3) zum Durchlass des Regenwassers und mit Rändern an einigen Seiten, dadurch gekennzeichnet, dass die Platte über einen oberen Rand, genannt oberer Rand (4, 5) verfügt, der als Biegung über der Plattenoberfläche ausgeführt ist, so dass sich eine Aushöhlung bildet, welche der Aufnahme einer eventuellen, gefalteten oder eingerollten Schutzplane entlang dieser Aushöhlung dient, und dadurch gekennzeichnet, dass der dem oberen Rand entgegengesetzte Rand, genannt unterer Rand (8, 9) konkav ausgeführt ist und dieselbe Oberfläche der Platte betrifft, so dass das von der geneigt angeordneten Platte herablaufende Wasser aufgefangen wird ; dieser obere und untere Rand sind nicht durchlöchert, wobei jedoch der untere Rand Wasserabflusslöcher (10) aufweist, die mit Abflussrohren verbunden werden können.

7. Platte gemäss Anspruch 6, dadurch gekennzeichnet, dass die Platte durchsichtig ist.

8. Platte gemäss Anspruch 6 oder 7, dadurch gekennzeichnet, dass die an den oberen und an den unteren Rand angrenzenden Ränder eventuell eine Biegung aufweisen, die als Aushöhlung oder Führung für eine Schutzplane dient.

9. Platte gemäss Anspruch 6-8, dadurch gekennzeichnet, dass die Löcher rechtwinklig zu den Hauptflächen der Platten angeordnet sind und unterschiedliche Durchmesser in der Plattendicke aufweisen oder auch nicht.